# EUROPEAN PATENT APPLICATION

(11) **EP 0 899 722 A2**
(43) Date of publication of application: **03.03.1999**
(21) Application number: 98306813.1
(22) Date of filing: 26.08.1998
(51) Int. Cl.: G11B 5/708

(54) **Magnetic recording medium**

(30) Priority: 28.08.1997 JP 232767/97
(71) Applicant: SONY CORPORATION, Tokyo (JP)
(72) Inventor: Nobuyuki, Nagai, Shinagawa-ku, Tokyo (JP)
(74) Representative: Ayers, Martyn Lewis Stanley

(57) **Abstract**

The present invention provides a magnetic recording medium capable of effectively reducing the noise.

The magnetic recording medium 1 includes a non-magnetic support body 2 on which a magnetic layer is formed from a non-magnetic powder and a ferromagnetic powder dispersed in a binder. The non-magnetic powder in the magnetic layer is contained in a range of 20 to 80 weight % with respect to a total amount of the non-magnetic powder and the ferromagnetic powder in the magnetic layer.

## Description

The present invention relates to a magnetic recording medium having a magnetic layer made from a ferromagnetic powder and a non-magnetic powder and in particular, to a magnetic recording medium which has a low noise level and can be preferably used for a high-density recording.

A magnetic recording medium is widely used as an audio tape, video tape, backup data cartridge, floppy disc, and the like. Recently, studies have been made on reducing the wavelength of the recording wavelength or increasing the recording density such a digital recording method, which in turn requires development of a magnetic recording medium having an excellent electromagnetic conversion characteristic.

In order to obtain a magnetic recording medium having such an excellent electromagnetic conversion characteristic, there has been made studies to improve the ferromagnetic powder ccnstituting the magnetic layer, to reduce the magnetic layer thickness, and to improve the surface flatness and smoothness of the magnetic recording medium itself.

As for the improvement of the ferromagnetic powder, for example, there has been developed a method to use a ferromagnetic alloy powder as the ferromagnetic powder or to reduce the ferromagnetic power particle size. More specifically, these improvements have brought a ferromagnetic powder having a saturation magnetization of 140 Am2/kg or above and a ferromagnetic powder having a longer axis length of 0.1 µm or below.

Moreover, as for the other improvements of the ferromagnetic powder, for example, there is a method to increase the coercive force of the ferromagnetic powder and make uniform the distribution of the coercive force. More specifically, there has been developed a ferromagnetic powder having a coercive force of 160 kA/m or above and a magnetic powder having more uniform distribution of particle size which reflects the coercive force distribution.

On the other hand, in a case of a paint-type magnetic recording medium, in order to improve the electromagnetic conversion characteristic, as has been described above, there has been made a study to reduce the film thickness of the magnetic layer. This is based on a method to improve the electromagnetic conversion characteristic by reducing the self demagnetization loss during a recording, These years, there have been suggested various paint types.

That is, in a conventional paint type magnetic recording medium in which a magnetic layer is formed directly on a non-magnetic support body, if the thickness of the magnetic layer is reduced to 0.05 µm to 0.5 µm, the magnetic layer is easily affected by the surface configuration of the non-magnetic support body, which makes it difficult to obtain a flat and smooth surface, and as a result, there arises a problem that the spacing loss during a recording/reproduction is increased.

In order to solve this problem, Japanese Patent Application Laid-Open 5-210838 discloses a method to form a non-magnetic under-coat layer (hereinafter, referred to as a non-magnetic layer) between the magnetic layer and the non-magnetic support body, thus enabling to reduce the thickness of the magnetic layer and to obtain a flat and smooth surface.

Furthermore, as for the paint-type magnetic recording medium having such two layers, in order to improve the electromagnetic conversion characteristic and reduce the noise, it is required to obtain a uniform paint film without any painting defect or painting seam. As such a method, Japanese Patent Application Laid-Open 5-285443 discloses a so-called simultaneous double layer paint method a die coater is used to simultaneously apply the aforementioned magnetic layer and the non-magnetic layer onto the non-magnetic support body. This simultaneous double painting method is also effective as a method to improve the adhesion between the magnetic layer and the non-magnetic layer and now this method has become a major method for preparing a double-layered paint type magnetic recording medium.

However, in such a magnetic recording medium, there is a need to further increase the recording density. For this, the noise should be greatly reduced.

Especially when used in combination with a high-sensitivity head such as an MR head, the noise reduction is more important than the reproduction output increase.

It is therefore and object of the present invention to provide a magnetic recording medium which enables to further reduce the noise while maintaining the conventional preferable reproduction output.

In order to achieve the aforementioned object, the present invention provides a magnetic recording medium includes a magnetic layer containing at least a non-magnetic powder and a ferromagnetic powder dispersed in a binder and formed on a non-magnetic support body, wherein a content of the non-magnetic powder in the magnetic layer is in a range of 20 weight % to 80 weight % with respect to the total weight of the non-magnetic powder and the ferromagnetic powder contained in the aforementioned magnetic layer.

Here, the aforementioned non-magnetic powder is preferably a non-magnetic iron oxide and especially preferable is α-Fe₂O₃.

Moreover, the aforementioned ferromagnetic powder is preferably a metal ferromagnetic powder. Furthermore, this metal ferromagnetic powder preferably has a coercive force of 150.0 kA/m or above and a saturation magnetization of 130.0 Am²/kg.

Moreover, the magnetic recording medium according to the present invention may be such that a non-magnetic layer containing a non-magnetic powder dispersed in a binder is formed on a non-magnetic support body and the aforementioned magnetic layer is formed on the non-magnetic layer.

In the magnetic recording medium according to the present invention having the aforementioned configuration, the magnetic layer is constituted by a non-magnetic powder and a ferromagnetic powder, wherein the content of the non-magnetic powder is in a range of 20 weight % to 80 weight % with respect to a total amount of the non-magnetic powder and the ferromagnetic powder in the magnetic layer. Consequently, the non-magnetic powder in the magnetic layer can reduce a magnetoelectric interaction between the magnetic powder particles contained in the magnetic layer, which enables to provide a magnetic recording medium capable of maintaining a reproduction output and reducing the noise.

Moreover, when the non-magnetic powder is a non-magnetic iron oxide, it is possible to effectively reduce the magnetoelectric interaction between magnetic powder particles and effectively reduce the noise. Thus, when the non-magnetic iron oxide is α-Fe₂O₃, it is possible to reduce the noise more effectively.

Furthermore, when the magnetic powder in the magnetic layer is a metal ferromagnetic powder having a coercive force of 150.0 kA/m and a saturation magnetization of 130.0 Am2/kg or above, i.e., when a magnetic powder having such a great magnetic force is used, even if a non-magnetic powder is contained in a great quantity, it is possible to effectively suppress lowering of the reproduction output caused by lowered magnetic flux density, so as to maintain the reproduction output and to effectively reduce the noise.

Moreover, in the magnetic recording medium having a non-magnetic layer and the aforementioned magnetic layer successively formed on the non-magnetic support body, it is possible to further reduce the film thickness of the magnetic layer and to obtain a flat and smooth surface, which is advantageous form the electromagnetic conversion characteristic such as the reproduction output.

The present invention will be more clearly understood from the following description, given by way of example only, with reference to the accompanying drawings in which:

Fig. 1 is a cross sectional view showing a portion of an embodiment of a magnetic recording medium according to the present invention.

Fig. 2 is a cross sectional view showing a portion of another embodiment of a magnetic recording medium according to the present invention.

Hereinafter, description will be directed to a magnetic recording medium according to embodiments of the present invention with reference to the attached drawings.

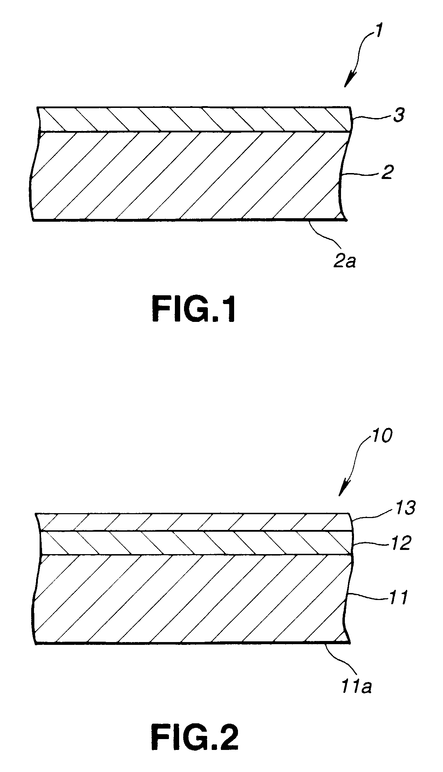

The magnetic recording medium 1 according to the present invention, as shown in Fig. 1, includes a magnetic layer 3 formed on one side of a non-magnetic support body 2. The magnetic recording medium 1 according to the present invention is characterized in that the magnetic layer 3 is made from a ferromagnetic powder and a non-magnetic powder which are dispersed in a binder.
as a material for the non-magnetic support body 2, there can be exemplified polyethylene terephthalate, polyethylene 2, 6-naphthalate, and other polyesters, polyolefin such as polypropylene, cellulose such as cellulose triacetate and cellulose diacetate, vinyl resin, polyimide, polycarbonate and other high-molecular material, or metal, glass, ceramics, and the like.

As the non-magnetic powder to be contained in the magnetic layer 3, there can be exemplified a titanium oxide such as a rutil type and the anatase type, aluminium oxide, and a non-magnetic iron oxide and preferably, iron oxide such as α-Fe₂O₃ and iron oxyhydroxide such as α-FeOOH and γ-FeOOH and other non-magnetic iron oxide.

It should be noted that the aforementioned non-magnetic powder, according to its purpose, may be doped with a proper quantity of impurities, or may be subjected to a surface treatment with a compound of Zn, Al, Si, Ti, Sn, Sb, Zr, or the like for the purpose of dispersion improvement, conductivity, color tone improvement, or the like.

Moreover, as the iron oxyhydroxide used in the present invention, it is preferable to use α-FeOOH, β-FeOOH, γ-FeOOH or the like and especially preferable α-FeOOH and γ-FeOOH. These iron oxyhydroxides may have a coexisting metal compound of Co, Ni, Cr, Mn, Mg, Ca, Ba, Sr, Zn, Ti, Mo, Ag, Cu, and the like or may have an aluminium compound and a rare earth element compound on the surface. Moreover, in the present invention, it is to be assumed that the concept of the iron oxyhydroxide includes an iron oxide as an intermediate product obtained by dehydrating these iron oxyhydroxides.

Moreover, the non-magnetic powder used in the present invention is contained in a range of 20 weight % to 80 weight % with respect to the total quantity of the non-magnetic powder and the ferromagnetic powder contained in the magnetic layer.

When the content of the non-magnetic powder is in the range of 20 weight % to 80 weight %, it is possible to suppress the interaction between the ferromagnetic powder particles, which in turn effectively suppresses the noise.

That is, when the content of the non-magnetic powder is below 20 weight %, it is impossible to sufficiently reduce the magnetic interaction between the ferromagnetic powder particles and it is impossible to effectively suppress the noise. Moreover, if the content of the non-magnetic powder exceeds 80 weight %, the content of the magnetic powder is decreased, lowering the magnetic flux density, which causes to lower the reproduction output.

As the ferromagnetic powder material to be contained in the magnetic layer 3, it is preferable to use a metal ferromagnetic powder, for example, a metal such as Fe, Co, Ni, and the like, or an alloy such as Fe-Co, Fe-Ni, Fe-Al, Fe-Ni-Al, Fe-Al-P, Fe-Ni-Si-Al, Fe-Ni-Si-Al-Mn, Fe-Mn-Zn, Fe-Ni-Zn, Co-Ni, Co-P, Fe-Co-Ni, Fe-Co-Ni-Cr, Fe-Co- Ni-P, Fe-Co-B, Fe-Co-Cr-B, Mn-Bi, Mn-Al, Fe-Co-V, and the like. Furthermore, a similar effect can be obtained by using an iron oxide such as γ-Fe₂O₃ and Fe₃O₄ or an iron compound such as barium ferrite.

Especially, as the metal ferromagnetic powder used in the present invention, it is preferable that the ferromagnetic powder have a coercive force of 150.0 kA/m or above. Moreover, the metal ferromagnetic powder used in the present invention preferably has a saturation magnetization of 130.0 Am2/kg or above.

Thus, by using a metal ferromagnetic powder having a coercive force and a saturation magnetization above predetermined values, even in the magnetic recording medium containing a plenty of non-magnetic powder in the magnetic layer 3, it is possible to assure a sufficient magnetic flux density and accordingly, to obtain a sufficient reproduction output.

That is, if the coercive force is below 150.0 kA/m, in the magnetic recording medium 1 according to the present invention containing a plenty of non-magnetic powder in the magnetic layer 3, it is impossible to assure a sufficient magnetic flux density, which remarkably lowers the reproduction output. Moreover, if the saturation magnetization is below 130.0 kA/m, in the magnetic recording medium 1 according to the present invention containing a plenty of non-magnetic powder in the magnetic layer 3, it is impossible to assure a sufficient magnetic flux density and the reproduction output is remarkably lowered.
as a binder in which the aforementioned non-magnetic powder and the magnetic powder are to be dispersed, it is possible to use a known thermo-plastic resin, thermo-setting resin, reaction type resin which have been conventionally used as binder for a magnetic recording medium. The average molecular weight is preferably in a range of 15000 to 200,000. These binders are used for the purpose of running durability, flexibility, toughness of the magnetic recording medium 1 as well as improvement of adhesion with the non-magnetic support body 2.

As the thermoplastic resin used as the aforementioned binder, there can be exemplified vinyl chloride, vinyl acetate, vinyl chloride - vinyl acetate copolymer, vinyl chloride - vinylidene chloride copolymer, vinyl chloride - acryronitrile copolymer acrylic acid ester - acrylonitrile copolymer, acrylic acid ester - vinyl chloride - vinylidene chloride copolymer, vinyl chloride - acrylonitrile copolymer acrylic acid ester - acrylonitrile copolymer, acrylic acid ester - vinylidene copolymer, methacrylic acid ester copolymer, acrylic acid ester - vinylidene chloride copolymer, methacrylic acid ester - vinylidene chloride copolymer, methacrylic acid ester - vinyl chloride copolymer, methacrylic acid ester - ethylene copolymer, polyvinyl fluoride, vinylidene chloride - acrylonitrile copolymer, acrylonitrile - butadiene copolymer, polyamide resin, polyvinyl butyral, cellulose derivative (cellulose acetate butyral, cellulose diacetate, cellulose triacetate, cellulose propionate, nitro cellulose), styrene - butadiene copolymer, polyurethane resin, polyester resin, amino resin, synthetic rubber, and the like.

Moreover, the thermo-setting resin or reaction type resin used as the aforementioned binder, there can be exemplified phenol resin, epoxy resin, polyurethane setting type resin, urea resin, melamine resin, alkyd resin, silicone resin, polyamine resin, ureaformaldehyde resin, and the like.

It should be noted that the aforementioned binders, for the purpose of improving the pigment dispersion, may contain a polar functional group such as -SO₃M, -OSO₃M, COOM, P=O (OM)₂, wherein M represents a hydrogen atom or an alkali metal such as lithium potassium, sodium and the like. Moreover, the aforementioned polar functional group may be other than the aforementioned, such as a side chain type having an end group of NR₁R₂, -NR₁R₂R₃⁺X⁻, or a main chain type of >NR₁R₂⁺X⁻. Here, the R₁, R₂, and R₃ in the formulae represent a hydrogen atom or a hydrocarbon group; and X⁻ is a halogen element ion such as fluorine, chlorine, bromine, iodine and the like or an inorganic or organic ion. Furthermore, there are polar functional groups such as -OH, -SH, -CN, epoxy. The content of these polar functional groups is in a range of 10⁻¹ to 10⁻⁸ mol and preferably in a range of 10⁻² to 10⁻⁶ mol/g. Note that each of the binders may be used solely or in combination with others.

Moreover, the content of the aforementioned binders together with the vinyl chloride binder in the present invention is preferably 1 to 100 weight parts and more preferably 10 to 50 weight parts with respect to the total 100 weight parts of the aforementioned non-magnetic powder and the ferromagnetic powder. When using one of the aforementioned vinyl chloride binders solely, its content is preferably 1 to 100 and more preferably 10 to 50 weight parts with respect to the total 100 weight parts of the non-magnetic powder and the ferromagnetic powder. If the content of the binder is too great, the ratio of the magnetic material in the magnetic layer is decreased, which decreases the saturation magnetic flux density of the magnetic recording medium, lowering the output, and the repeated sliding at a drive easily causes plastic flow of the painted film, which lowers the running durability.

Moreover, if the content of the binder is too small, there arise problems that non-magnetic powder cannot be preferably dispersed and the dynamic strength of the painted film is lowered.

Moreover, the magnetic layer 3 may contain as abrasion particles, for example, aluminium (α, β, γ), chrome oxide, silicon carbide, diamond, garnet, emery, boron nitride, titanium carbide, titanium oxide (rutile, anatase), and the like. The content of these abrasion particles is preferably 20 weight parts and more preferably 10 weight parts or below with respect to the total 100 weight parts of the non-magnetic powder and the ferromagnetic powder. Moreover, the Moh's hardness of the abrasion particles is preferably 4 or above and more preferably 5 or above. Furthermore, the specific gravity of the abrasion particles is preferably 2 to 6 and more preferably, 3 to 5. Besides, it is preferable that the abrasion particles have an average particle diameter of 0.5 µm or below and more preferably 0.3 µm or below.

It should be noted that the aforementioned binders may be used together with polyisocyanate for bridging-setting the binders. As this polyisocyanate, it is possible to use toluene diisocyanate or its adduct, or alkylene diisocyanate or its adduct, and the like. The content ratio of the polyisocyanate to be added to the aforementioned binders is preferably 5 to 80 weight parts and more preferably 10 to 50 weight parts with respect to 100 weight parts of the binders.

It should be noted that the magnetic layer 3 also may contain a lubricant and a surface active agent. As the lubricant, it is possible to use graphite, molybdenum disulfide, tungsten disulfide, silicon oil, fatty acid having 10 to 22 carbons or their oligomers. These lubricants may be added only to the magnetic layer 3 or to any of the layers when a plurality of layers are formed. As the aforementioned surface active agent, it is possible to use nonion, anion, cathion, and amphoteric surface active agents. The type and quantity may be selected depending on the purpose, and these agents may be used only to one layer.

The magnetic layer 3 is formed by applying onto the non-magnetic support body 2 layer constituting materials prepared as paints which are then dried. As a solvent used for preparing the paints, it is possible to use acetone, methylethyle ketone, methyl isobutyl ketone, cyclohexanon and other ketone solvents; methanol, ethanol, propanol and other alcohol solvents; methyl acetate, ethyl acetate, butyl acetate, propyl acetate, ethyl lactate, ethylene glycol acetate and other ester solvents; diethylene glycol dimethyl ether, 2-etoxyethanol, tetrahydrofurane, dioxan and other ether solvents; benzene, toluene, xylene and other aromatic hydrocarbon solvents; methylene chloride, ethylene chloride, carbon tetrachloride, chloroform, chlorobenzene, and other halogen hydrocarbon solvents.

It should be noted that the opposite side 2a of the non-magnetic support body 2 not having the aforementioned magnetic layer 3 may have a back coat layer for the purpose of improving the running efficiency and charge prevention as well as transfer prevention of the magnetic recording medium 1. Moreover, between the magnetic layer 3 and the non-magnetic support body 2, there may be formed a under coat layer for reinforcing the adhesion. However, this under coat layer is different from a non-magnetic layer 12 which will be detailed later.

Moreover, Fig. 2 shows another embodiment of magnetic recording medium 10 according to the present invention wherein a non-magnetic support body 11 is covered with a non-magnetic layer 12 made from a non-magnetic powder dispersed in a binder, on which is formed a magnetic layer 13 made from a non-magnetic powder and a ferromagnetic powder dispersed in a binder.

Here, the non-magnetic powder and the binder of the non-magnetic layer 12 may be selected from any of the aforementioned. Moreover, the ferromagnetic powder and the binder to be used for the magnetic layer 13 may be selected from the aforementioned and have a configuration similar to the aforementioned magnetic layer 3.

Here, the magnetic layer 13 is preferably has a thickness in a range of 0.02 µm to 0.5 µm.

If the thickness of the magnetic layer 13 is below 0.02 µm, it is impossible to assure a sufficient electromagnetic conversion characteristic. Moreover, if the thickness of the magnetic layer 13 exceeds 0.5 µm, there is caused a phenomenon of recording demagnetization for the reduced recording wavelength.

Next, detailed description will be given on a production procedure of the magnetic recording medium 1 having the aforementioned configuration.

That is, the magnetic recording medium 1 is prepared by a step for preparation of a paint to be applied onto the non-magnetic support 2; a magnetic layer paint application step for applying the prepared paint onto the non-magnetic support body 2; a back coat layer forming step for forming a back coat layer on the opposite side 2a of the non-magnetic support body 2 not having the magnetic layer; and a cutting step for cutting the magnetic recording medium 1 having the magnetic layer 3 and the back coat layer.

Firstly, the paint preparation step consists of a kneading step, a mixing step, and a dispersion step. The kneading step and the dispersion step are carried out by using a mixing apparatus such as a roll mill, ball mill, sand mill, agitor, kneader, extruder, homogenizer, ultrasonic disperison apparatus and the like. Firstly, in the kneading step, a ferromagnetic powder, a non-magnetic powder, binder, additives, and a dispersing agent are mixed. Next, the obtained mixture is solved with a temperature and repeatedly mixed by the mixing apparatus, after which the obtained mixture is filtrated by using a filter.

Next, the paint thus prepared is applied onto the non-magnetic support body 2 in the magnetic layer paint application step so as to obtain the magnetic layer 3 on the non-magnetic support body 2. The paint application step of the magnetic recording medium 1 is carried out by applying the aforementioned paint onto the non-magnetic support body 2 by way of gravure coating, die coat painting, and other conventional known methods.

Moreover, in the case of the magnetic recording medium 10, when the non-magnetic layer 12 is to be provided between the magnetic layer 13 and the non-magnetic support body 11 as has been described above, prior to forming the aforementioned magnetic layer 13, a paint of a non-magnetic powder dispersed in a binder is applied to form the non-magnetic layer 12, on which is applied the paint for the aforementioned magnetic layer 13 to form the magnetic layer 13. Here, the non-magnetic powder and the binder to be used for the non-magnetic layer 12 may be any of the known materials.

When forming the non-magnetic layer 12 and the magnetic layer 13 on the non-magnetic support body 1, there are two types of coating methods. On of them is a so called wet-on-dry coating method wherein a layer is formed and dried before another layer is applied. The other is a so called wet-on-wet coating method wherein the magnetic layer 13 is applied on the non-magnetic layer 12 which is not yet dried.

In the wet-on-wet coating method, a magnetic paint of the magnetic layer 13 is applied on the non-magnetic layer 12 which is in a wet state and accordingly, it is possible to obtain a flat and smooth surface of the non-magnetic layer 12 and a preferable surface of the magnetic layer 13 as well as to improve the adhesion between the non-magnetic layer 12 and the magnetic layer 13. As a result, it is possible to satisfy the requirements of a magnetic recording medium for a high density recording including high output and low noise as well as eliminate peeling-off and increase the film strength. Moreover, the drop-out can also be reduced, enhancing the reliability.

On the other hand, in the wet-on dry coating method, as disclosed in Japanese Patent Application Laid-Open 6-236543, it is necessary to select as the non-magnetic layer a material which is has a sufficient solvent-resistance against the paint of the magnetic layer formed thereon. Moreover, in this method, the surface flatness is deteriorated, which adversely affects the electromagnetic conversion characteristic.

To cope with this, in the magnetic layer paint application step for the magnetic recording medium 10 having a two-layered configuration, the aforementioned..wet-on-wet method is applied. It should be noted that when the non-magnetic layer 12 and the magnetic layer 13 are formed by this wet-on-wet coating method, there is a case as shown in Fig. 2 when a clear boundary is present between these two layers as well as a case when components of the two layers are mixed with a predetermined thickness. Both of these cases are included in the embodiments of the present invention.

Next, after the aforementioned magnetic layer paint application, the magnetic recording medium 1 having the magnetic layer 3 formed thereon is introduced to a dryer and subjected to a calendar processing by a calendar apparatus, after which rolled up by a roll-up role.

Next, in a back coat layer forming step, a back coat layer is formed on the opposite side 2a of the magnetic recording medium 1 not having the magnetic layer 3.

It should be noted that in a case of the magnetic recording medium 10 having the non-magnetic layer 12 and the magnetic layer 13, the calendar processing is carried out and a back coat layer is formed on the opposite side lla of the non-magnetic support body 11 not having the magnetic layer 12 in the same way as the magnetic recording medium 1.

Finally, after the aforementioned back coat layer forming step, the magnetic recording medium 1 is fed to a cutting step to be cut into a predetermined width, for example, 8 mm along the longitudinal direction so as to obtain a plurality of magnetic tapes.

It should be noted that in the case of the magnetic recording medium 10 having the non-magnetic layer 12 and the magnetic layer 13, in the same way as in the magnetic recording medium 1, the cutting step is carried out to obtain a plurality of magnetic tapes.

### [Examples]

Hereinafter, description will be directed to specific experiments results about the embodiments of the present invention.

### Example 1

Firstly, a magnetic paint was prepared by using a metal ferromagnetic powder having a coercive force of 178.6 kA/m and saturation magnetization of 146.2 Am²/kg as the ferromagnetic powder and α-Fe₂O₃ as the non-magnetic powder to be contained in the magnetic layer in such a manner that the content of the non-magnetic powder in the magnetic layer is 30 weight % with respect to the total amount of the non-magnetic powder and the ferromagnetic powder with a composition described below.

The magnetic paint was prepared by mixing the ferromagnetic powder, non-magnetic powder, binder, additive, and solvent by using an extruder, after which the mixture was dispersed by using a sand mill and passed through a filter.

### <Magnetic Paint Composition>

| | |
|---|---|
| Ferromagnetic powder: Metal ferromagnetic powder (longer axis length 0.10 µm; X-ray particle diameter 16.0 nm; coercive force 178.6 kA/m; saturation magnetization 146.2 Am²/kg) | 70 weight parts |
| Non-magnetic powder: α-Fe₂O₃ (specific surface 54 m²) | 30 weight parts |
| Binders: Vinyl chloride copolymer (MR-110 produced by Nihon Zeon Co., Ltd.) | 14 weight parts |
| Polyester polyurethane resin (average molecular weight 35000 produced by Toyobo co., Ltd.) | 3 weight parts |
| Additives: α-Al₂O₃ | 5 weight parts |
| Stearic acid | 1 weight part |
| Heptil stearate | 1 weight part |
| Solvents: Methylethyl ketone | 150 weight parts |
| Cyclohexanon | 150 weight parts |

Immediately before the paint application, 3 weight parts of polyisocyanate are added to the mixture and the obtained mixture was applied so as to form a magnetic layer having a thickness of 3 µm on film made from a polyethylene terephthalate having a thickness of 7 µm and after subjected to an orientation processing by using a solenoid coil, dried and subjected to a calendar treatment and setting treatment. Furthermore, a back coat layer paint having a composition described below was applied onto the opposite side not having the aforementioned magnetic layer and the film was cut into a width of 8 mm.

### <Back Coat Paint Composition>

| | | |
|---|---|---|
| Powder | Carbon black (trade name: Asahi #50) | 100 weight parts |
| Binder | polyester polyurethane (trade name: Nipporan N-2304) | 100 weight parts/ |
| Solvents | Methylethyl ketone | 500 weight parts |
| | Toluene | 500 weight parts |

### Example 2

A magnetic tape was prepared in the same way as in Example 1 except for that the content of α-Fe₂O₃ was 50 weight parts and the content of the metal ferromagnetic powder was 50 weight parts, so that the content of the non-magnetic powder in the magnetic layer was 50 weight % weight respect to the total amount of the non-magnetic powder and the magnetic powder.

### Example 3

A magnetic tape was prepared in the same way as in Example 1 except for that the content of α-Fe₂O₃ was 70 weight parts and the content of the metal ferromagnetic powder was 30 weight parts, so that the content of the non-magnetic powder in the magnetic layer was 70 weight % weight respect to the total amount of the non-magnetic powder and the magnetic powder.

### Example 4

A magnetic tape was prepared in the same way as in Example 2 except for that the ferromagnetic powder contained in the magnetic layer was a metal ferromagnetic powder having a coercive force of 172.4 kA/m, saturation magnetization of 148.0 Am²/kg, longer axis length of 0.11 µm, and X-ray particle diameter of 23 nm.

### Example 5

A magnetic tape was prepared in the same way as in Example 2 except for that the ferromagnetic powder contained in the magnetic layer was a metal ferromagnetic powder having a coercive force of 159.8 kA/m, saturation magnetization of 147.2 Am²/kg, longer axis length of 0.20 µm, and X-ray particle diameter of 17 nm.

### Example 6

A magnetic tape was prepared in the same way as in Example 2 except for that the ferromagnetic powder contained in the magnetic layer was a metal ferromagnetic powder having a coercive force of 155.4 kA/m, saturation magnetization of 150.4 Am²/kg, longer axis length of 0.20 µm, and X-ray particle diameter of 24 nm.

### Comparative Example 1

A magnetic tape was prepared in the same way as in Example 1, except for that the magnetic layer contained no non-magnetic powder and 100 weight % of ferromagnetic powder.

### Comparative Example 2

A magnetic tape was prepared in the same way as in Example 1 except for that the content of α-Fe₂O₃ was 10 weight parts and the content of the metal ferromagnetic powder was 90 weight parts, so that the content of the non-magnetic powder in the magnetic layer was 10 weight % weight respect to the total amount of the non-magnetic powder and the magnetic powder.

### Comparative Example 3

A magnetic tape was prepared in the same way as in Example 1 except for that the content of α-Fe₂O₃ was 90 weight parts and the content of the metal ferromagnetic powder was 10 weight parts, so that the content of the non-magnetic powder in the magnetic layer was 90 weight % weight respect to the total amount of the non-magnetic powder and the magnetic powder.

### Comparative Example 4

A magnetic tape was prepared in the same way as in Example 2 except for that the ferromagnetic powder contained in the magnetic layer was Fe₃O₄ having a coercive force of 53.4 kA/m, saturation magnetization of 82.1 Am²/kg, and a specific surface of 32 m²/g.

### Comparative Example 5

A magnetic tape was prepared in the same way as in Example 1 except for that the ferromagnetic powder contained in the magnetic layer was a metal ferromagneti powder having a coercive force of 175.3 kA/m, saturation magnetization of 110.6 Am²/kg, A-ray paticle diameter of 14 nm and a longer axis length of 0.10 µm.

### Comparative Example 6

A magnetic tape was prepared in the same way as in Example 2 except for that the ferromagnetic powder contained in the magnetic layer was a metal ferromagnetic powder having a coercive force of 175.3 kA/m, saturation magnetization of 110.6 Am²/kg, X-ray particle diameter of 14 nm, and a longer axis length of 0.10 µm.

### Comparative Example 7

A magnetic tape was prepared in the same way as in Example 3 except for that the ferromagnetic powder contained in the magnetic layer was a metal ferromagnetic powder having a coercive force of 175.3 kA/m, saturation magnetization of 110.6 Am²/kg, X-ray particle diameter of 14 nm, and a longer axis length of 0.10 µm.

### Comparative Example 8

A magnetic tape was prepared in the same way as in Example 1 except for that the ferromagnetic powder contained in the magnetic layer was a metal ferromagnetic powder having a coercive force of 142.7 kA/m, saturation magnetization of 135.4 Am²/kg, X-ray particle diameter of 18 nm, and a longer axis length of 0.10 µm.

### Comparative Example 9

A magnetic tape was prepared in the same way as in Example 2 except for that the ferromagnetic powder contained in the magnetic layer was a metal ferromagnetic powder having a coercive force of 142.7 kA/m, saturation magnetization of 135.4 Am²/kg, X-ray particle diameter of 18 nm, and a longer axis length of 0.10 µm.

### Comparative Example 10

A magnetic tape was prepared in the same way as in Example 3 except for that the ferromagnetic powder contained in the magnetic layer was a metal ferromagnetic powder having a coercive force of 142.7 kA/m, saturation magnetization of 135.4 Am²/kg, X-ray particle diameter of 18 nm, and a longer axis length of 0.10 µm.

The respective magnetic tapes thus prepared were subjected to tests of surface roughness, magnetic characteristic, and electromagnetic conversion characteristic as described below. The test results are shown in Tables 1 and 2.

The surface roughness was evaluated by using a non-contact type surface roughness meter of the interference method to determine an average roughness (Ra) along the center line. Moreover, the magnetic characteristic was evaluated in the coercive force, residual magnetic flux density by employing sample vibration type magnetometer.

Moreover, the electromagnetic conversion characteristic was determined by using a fixed head type electric characteristic measuring apparatus. This measuring apparatus consists of a rotary drum and a head which is in contact with the rotary drum. Here, a magnetic tape is wound around the drum. Firstly, with an optimal recording current of each tape, a rectangular wave signal of 10 MHz was recorded and an output level of 10 MHz was detected by a spectrum analyzer. It should be noted that a relative speed between the tap and the head was assumed to be 3.33m/s. Moreover, 10 MHz C/N was assumed to be a difference between the noise at 9 MHz and the output level of 10 MHz. Here, the 10 MHz output and the 10 MHz C/N values were calculated, assuming 0 dB the value of Comparative Example 1.

**[Table 1]**

| | Metal ferromagnetic powder | | Non-magnetic powder |
|---|---|---|---|
| | Coercive force (kA/m) | Saturation magnetization (Am²/kg) | Content in magnetic layer (wt %) |
| Example 1 | 178.6 | 146.2 | 30 |
| Example 2 | 178.6 | 146.2 | 30 |
| Example 3 | 178.6 | 146.2 | 70 |
| Example 4 | 172.4 | 148.0 | 50 |
| Example 5 | 159.8 | 147.2 | 50 |
| Example 6 | 155.4 | 150.4 | 50 |

| | Magnetic tape | | | | | |
|---|---|---|---|---|---|---|
| | Magnetic layer thickness (µm) | Coercive force (kA/m) | Residual magnetic flux density (mT) | Ra (nm) | 10 MHz output (dB) | 10 MHz C/N (dB) |
| Example 1 | 3.0 | 182.1 | 245 | 12.1 | -1.1 | +0.8 |
| Example 2 | 3.0 | 188.5 | 170 | 11.5 | -1.8 | +1.5 |
| Example 3 | 3.0 | 193.5 | 103 | 11.8 | -3.2 | +1.4 |
| Example 4 | 3.0 | 175.1 | 172 | 13.0 | -1.6 | +0.2 |
| Example 5 | 3.0 | 164.2 | 173 | 11.4 | -1.9 | +0.2 |
| Example 6 | 3.0 | 154.1 | 178 | 13.5 | -0.9 | +0.5 |

**[Table 2]**

| | Metal ferromagnetic powder | | Non-magnetic powder |
|---|---|---|---|
| | Coercive force (kA/m) | Saturation magnetization (Am²/kg) | Content in magnetic layer (wt %) |
| Comp. Example 1 | 178.6 | 146.2 | 0 |
| Comp. Example 2 | 178.6 | 146.2 | 10 |
| Comp. Example 3 | 178.6 | 146.2 | 90 |
| Comp. Example 4 | 53.4 | 82.1 | 50 |
| Comp. Example 5 | 175.3 | 110.6 | 30 |
| Comp. Example 6 | 175.3 | 110.6 | 50 |
| Comp. Example 7 | 175.3 | 110.6 | 70 |
| Comp. Example 8 | 142.7 | 135.4 | 30 |
| Comp. Example 9 | 142.7 | 135.4 | 50 |
| Comp. Example 10 | 142.7 | 135.4 | 70 |

| | Magnetic tape | | | | | |
|---|---|---|---|---|---|---|
| | Magnetic layer thickness (µm) | Coercive force (kA/m) | Residual magnetic flux density (mT) | Ra (nm) | 10 MHz output (dB) | 10 MHz C/N (dB) |
| Comp. Ex. 1 | 3.0 | 179.4 | 347 | 12.4 | 0 | 0 |
| Comp. Ex. 2 | 3.0 | 188.5 | 170 | 11.5 | -1.8 | +1.5 |
| Comp. Ex. 3 | 3.0 | 208.1 | 33 | 11.2 | -6.3 | -1.5 |
| Comp. Ex. 4 | 3.0 | 84.8 | 96 | 16.0 | -8.2 | -2.7 |
| Comp. Ex. 5 | 3.0 | 178.1 | 184 | 12.0 | -1.7 | -0.1 |
| Comp. Ex. 6 | 3.0 | 179.6 | 127 | 11.8 | -2.34 | +0.5 |
| Comp. Ex. 7 | 3.0 | 185.4 | 78 | 12.0 | -4.0 | +0.4 |
| Comp. Ex. 8 | 3.0 | 144.5 | 226 | 12.6 | -2.3 | -0.9 |
| Comp. Ex. 9 | 3.0 | 148.2 | 155 | 13.5 | -3.2 | -0.2 |
| Comp. Ex 10 | 3.0 | 153.9 | 95 | 11.8 | -4.6 | -0.4 |

### <Examples 1 to 6 compared to Comparative Examples 1 to 3>

Firstly, as is clear from Tables 1 and 2, Examples 1 to 6 containing the non-magnetic powder in the magnetic layer in the range of 20 to 80 weight % exhibited remarkably higher C/N values at 10 MHz than the Comparative Examples 1 to 3 containing the non-magnetic powder in the magnetic layer out of the aforementioned range.

Moreover, in the Examples 1 to 6, the 10 MHz output, i.e., the reproduction output is lowered to a level of no problem, whereas the Comparative Example 3 showed a remarkable lowering of the reproduction output.

Thus, in the magnetic recording medium according to the present invention, containing the non-magnetic powder in the magnetic layer is in the range of 20 to 80 weight % enables to significantly reduce the noise while almost maintaining the reproduction output.

In other words, with the magnetic recording medium containing the non-magnetic powder below 20 weight % in the magnetic layer, it is impossible to sufficiently reduce the interaction between the magnetic powder particles, which results in a high noise, whereas in the magnetic recording medium containing the non-magnetic powder in the magnetic layer exceeding 80 weight %, the interaction between the magnetic powder particles is extremely lowered, which lowers the magnetic flux density, resulting in lowering of the reproduction output.

### <Examples 1 to 6 compared to Comparative Examples 4 to 7>

As is clear from Tables 1 and 2, Examples 1 to 6 containing the metal ferromagnetic powder having a saturation magnetization quantity equal to or above 130.0 Am2/kg exhibited significantly higher C/N at 10 MHz than the Comparative Examples 4 to 7 having a saturation magnetization below 130.0 Am2/kg.

Moreover, Examples 1 to 6 exhibited higher 10 MHz outputs, i.e., higher reproduction outputs than the Comparative Examples 4 to 7.

Thus, in the magnetic recording medium according to the present invention containing the metal ferromagnetic powder having a saturation magnetization equal to or above 130.0 Am2/kg, it is possible to almost maintain the reproduction output as well as to reduce the noise.

That is, when the metal ferromagnetic powder has a saturation magnetization of 130.0 Am2/kg or above, it is possible to sufficiently reduce the interaction between the magnetic powder particles and accordingly, to reduce the noise while maintaining a sufficient magnetic flux density required for reproduction, which in turn enables to almost maintain the reproduction output.

In other words, if the metal ferromagnetic powder has a saturation magnetization below 130.0 Am2/kg, it is impossible to assure a sufficient magnetic flux density required for reproduction and accordingly, it is impossible to suppress lowering of the reproduction output.

### <Examples 1 to 6 compared to Comparative Examples 8 to 10>

As is clear from Tables 1 and 2, Examples 1 to 6 using the metal ferromagnetic powder having a coercive force equal to or above 150.0 kA/m exhibited remarkably higher C/N at 10 MHz than the Comparative Examples 8 to 10 having the coercive force below 150.0 kA/m.

Moreover, Examples 1 to 6 exhibited higher 10 MHz outputs, i.e., higher reproduction outputs than the Comparative Examples 8 to 10.

Thus, in the magnetic recording medium according to the present invention using the metal ferromagnetic powder having a coercive force equal to or higher than 150.0 kA/m, it is possible to almost maintain the reproduction output as well as to reduce the noise.

That is, when the metal ferromagnetic powder has a coercive force equal to or above 150.0 kA/m, it is possible to sufficiently reduce the interaction between the magnetic powder particles and accordingly and to reduce the noise, assuring a sufficient magnetic flux density required for reproduction, which enables to almost maintain the reproduction output.

In other words, when the metal ferromagnetic powder has a coercive force below 150.0 kA/m, it is impossible to assure a sufficient magnetic flux density required for reproduction and accordingly, it is impossible to suppress lowering of the reproduction output.

Next, description will be directed to an embodiment of a two-layered type magnetic recording medium having a non-magnetic layer and a magnetic layer.

### Example 7

For preparing a non-magnetic layer paint, the following composition was used. Here, the preparation of the non-magnetic layer paint was carried out in the same way as described above. A non-magnetic powder, binder, additive, and solvent were mixed and kneaded by an extruder, after which the mixture was subjected to dispersion by a sand mill for 4 hours.

### <Non-magnetic layer paint>

| | | |
|---|---|---|
| Non-magnetic power | a-Fe2O3 (specific surface 54 m2/g) | 100 weight parts |
| Binder | Vinyl chloride copolymer (average molecular weight 10000, functional group [-SO3K] = 7 x 10-5 mol/g) | 16 weight parts |
| Additives | Stearic acid | 1 weight part |
| | Heptil stearate | 1 weight part |
| Solvents | Methylethyl ketone | 105 weight parts |
| | Cyclohexanon | 105 weight parts |

Immediately before the paint application, in the same way as in Example 1, 3 weight parts of polyisocianate was added to each of the magnetic layer paint and the non-magnetic layer paint. By using a 4-lip die coater, the respective paints were simultaneously applied onto a film made from polyethylene terephthalate having a thickness of 7 µm, so that the non-magnetic layer has a thickness of 2 µm and the magnetic layer has a thickness of 0.2 µm.

After this, in the same way as in Example 1, orientation processing was carried out by using a solenoid coil, after which drying, calendar treatment, and setting were carried out. Furthermore, a back coat layer paint similar to the one used in Example 1 was applied on the opposite side of the film not having the aforementioned magnetic layer. The obtained film was cut into tapes having a width of 8 mm.

### Example 8

A magnetic tape was prepared in the same way as in Example 7, except for that the magnetic layer contained 50 weight parts of a-Fe2O3 and 50 weight parts of the metal ferromagnetic powder so that the content of the non-magnetic powder in the magnetic layer was 50 weight % with respect to the total amount of the non-magnetic powder and the magnetic powder.

### Example 9

A magnetic tape was prepared in the same way as in Example 7, except for that the magnetic layer contained 70 weight parts of a-Fe2O3 and 30 weight parts of the metal ferromagnetic powder so that the content of the non-magnetic powder in the magnetic layer was 70 weight % with respect to the total amount of the non-magnetic powder and the magnetic powder.

### Comparative Example 11

A magnetic tape was prepared in the same way as in Example 7 except for that the magnetic layer contained 100 weight % of metal ferromagnetic powder without containing any non-magnetic powder.

### Comparative Example 12

A magnetic tape was prepared in the same way as in Example 7 except for that the magnetic layer contained 10 weight parts of a-Fe2O3 and 90 weight parts of metal ferromagnetic powder so that the content of the non-magnetic powder in the magnetic layer was 10 weight % with respect to the total amount of the non-magnetic powder and the magnetic powder.

### Comparative Example 13

A magnetic tape was prepared in the same way as in Example 7 except for that the magnetic layer contained 90 weight parts of a-Fe2O3 and 10 weight parts of metal ferromagnetic powder so that the content of the non-magnetic powder in the magnetic layer was 90 weight % with respect to the total amount of the non-magnetic powder and the magnetic powder.

### Comparative Example 14

A magnetic tape was prepared in the same way as in Example 7 except for that the magnetic layer contained as the magnetic powder a metal ferromagnetic powder having a coercive force of 175.3 kA/m, a saturation magnetization of 110.6 Am2/kg, X-ray particle diameter of 14 nm, and a longer axis length of 0.10 mm.

### Comparative Example 15

A magnetic tape was prepared in the same way as in Example 8 except for that the magnetic layer contained as the magnetic powder a metal ferromagnetic powder having a coercive force of 175.3 kA/m, a saturation magnetization of 110.6 Am2/kg, X-ray particle diameter of 14 nm, and a longer axis length of 0.10 mm.

### Comparative Example 16

A magnetic tape was prepared in the same way as in Example 9 except for that the magnetic layer contained as the magnetic powder a metal ferromagnetic powder having a coercive force of 175.3 kA/m, a saturation magnetization of 110.6 Am2/kg, X-ray particle diameter of 14 nm, and a longer axis length of 0.10 mm.

### Comparative Example 17

A magnetic tape was prepared in the same way as in Example 7 except for that the magnetic layer contained as the magnetic powder a metal ferromagnetic powder having a coercive force of 142.7 kA/m, a saturation magnetization of 135.4 Am2/kg, X-ray particle diameter of 18 nm, and a longer axis length of 0.10 mm.

### Comparative Example 18

A magnetic tape was prepared in the same way as in Example 8 except for that the magnetic layer contained as the magnetic powder a metal ferromagnetic powder having a coercive force of 142.7 kA/m, a saturation magnetization of 135.4 Am²/kg, X-ray particle diameter of 18 nm, and a longer axis length of 0.10 mm.

### Comparative Example 19

A magnetic tape was prepared in the same way as in Example 9 except for that the magnetic layer contained as the magnetic powder a metal ferromagnetic powder having a coercive force of 142.7 kA/m, a saturation magnetization of 135.4 Am2/kg, X-ray particle diameter of 18 nm, and a longer axis length of 0.10 mm.

The respective magnetic tapes thus prepared were subjected to tests of surface roughness, magnetic characteristic, and electromagnetic conversion characteristic as described below. The test results are shown in Tables 3.

The surface roughness was evaluated by using a non-contact type surface roughness meter of the interference method to determine an average roughness (Ra) along the center line. Moreover, the magnetic characteristic was evaluated in the coercive force, residual magnetic flux density by employing sample vibration type magnetometer.

Moreover, the electromagnetic conversion characteristic was determined by using a fixed head type electric characteristic measuring apparatus. This measuring apparatus consists of a rotary drum and a head which is in contact with the rotary drum. Here, a magnetic tape is wound around the drum. Firstly, with an optimal recording current of each tape, a rectangular wave signal of 10 MHz was recorded and an output level of 10 MHz was detected by a spectrum analyzer. It should be noted that a relative speed between the tap and the head was assumed to be 3.33m/s. Moreover, 10 MHz C/N was assumed to be a difference between the noise at 9 MHz and the output level of 10 MHz. Here, the 10 MHz output and the 10 MHz C/N values were calculated, assuming 0 dB the value of Comparative Example

**[Table 3]**

| | Metal ferromagnetic powder | | Non-magnetic powder |
|---|---|---|---|
| | Coercive force (kA/m) | Saturation magnetization (Am²/kg) | Content in magnetic layer (wt %) |
| Example 7 | 178.6 | 146.2 | 30 |
| Example 8 | 178.6 | 146.2 | 50 |
| Example 9 | 178.6 | 146.2 | 70 |
| Comp. Example 11 | 178.6 | 146.2 | 0 |
| Comp. Example 12 | 178.6 | 146.2 | 10 |
| Comp. Example 13 | 178.6 | 146.2 | 90 |
| Comp. Example 14 | 175.3 | 110.6 | 30 |
| Comp. Example 15 | 175.3 | 110.6 | 50 |
| Comp. Example 16 | 175.3 | 110.6 | 70 |
| Comp. Example 17 | 142.7 | 135.4 | 30 |
| Comp. Example 18 | 142.7 | 135.4 | 50 |
| Comp. Example 19 | 142.7 | 135.4 | 70 |

| | Magnetic tape | | | | | |
|---|---|---|---|---|---|---|
| | Magnetic layer thickness (µm) | Coercive force (kA/m) | Residual magnetic flux density (mT) | Ra (nm) | 10 MHz output (dB) | 10 MHz C/N (dB) |
| Example 7 | 0.2 | 181.5 | 247 | 4.3 | -0.8 | +1.2 |
| Example 8 | 0.2 | 189.6 | 172 | 3.4 | -1.5 | +1.8 |
| Example 9 | 0.2 | 192.4 | 110 | 4.7 | -2.3 | +2.0 |
| Comp. Ex. 11 | 0.2 | 178.3 | 352 | 4.1 | +0.9 | +0.3 |
| Comp. Ex. 12 | 0.2 | 179.7 | 322 | 3.7 | +0.1 | +0.8 |
| Comp. Ex. 13 | 0.2 | 207.2 | 35 | 4.6 | -5.9 | -1.4 |
| Comp. Ex. 14 | 0.2 | 180.2 | 182 | 4.5 | -1.3 | +0.2 |
| Comp. Ex. 15 | 0.2 | 183.2 | 127 | 3.6 | -2.0 | +0.8 |
| Comp. Ex. 16 | 0.2 | 187.7 | 83 | 4.5 | -3.2 | +1.0 |
| Comp. Ex. 17 | 0.2 | 143.5 | 226 | 4.3 | -2.2 | -0.5 |
| Comp. Ex. 18 | 0.2 | 149.5 | 158 | 3.8 | -2.9 | -0.1 |
| Comp. Ex. 19 | 0.2 | 156.2 | 99 | 4.5 | -3.7 | -0.2 |

### <Examples 7 to 9 compared to Comparative Examples 11 to 13>

As is clear from Table 3, the Examples 7 to 9 containing the non-magnetic powder in the range of 20 to 80 weight % in the magnetic layer exhibited greater 10 MHz C/N values and greater noise reduction than the Comparative Examples 11 to 13.

Moreover, Examples 7 to 9 showed reproduction output lowering which is at the level of no problem, i.e., the reproduction output is almost maintained. On the other hand, especially Comparative Example 13 showed a remarkable lowering of the reproduction output, disabling to assure a sufficient reproduction output.

Thus, in the two-layered type magnetic recording medium as well, in the same way as the magnetic recording medium having the magnetic layer alone as in the aforementioned Examples 1 to 6, it has been found that the content of the non-magnetic powder in the magnetic layer is preferably in the range of 20 to 80 weight %. The reason is the same as has been described for Examples 1 to 6.

### <Examples 7 to 9 compared to Comparative Examples 14 to 16>

As is clear from Table 3, Examples 7 to 9 containing the metal ferromagnetic powder having a saturation magnetization of 130.0 Am2/kg or above exhibited a much higher C/N at 10 MHz than the Comparative Examples 14 containing a power having a saturation magnetization below 130.0 Am2/kg.

Moreover, Examples 7 to 9 exhibited a higher 10 MHz output, i.e., a higher reproduction output than the Comparative Examples 14 to 16.

Consequently, it has been made clear that the magnetic recording medium according to the present invention containing a metal ferromagnetic powder having saturation magnetization equal to or above 130.0 Am2/kg enables to almost maintain the reproduction output and reduce the noise.

That is, when the metal ferromagnetic powder has saturation magnetization equal to or above 130.0 Am2/kg, it is possible to sufficiently reduce the interaction between the magnetic particles and accordingly, to reduce the noise as well as to assure a sufficient magnetic flux density required for reproduction, thus enabling to almost maintain the reproduction output.

In other words, when using a metal ferromagnetic powder having saturation magnetization below 130.0 Am2/kg, it is impossible to assure a sufficient magnetic flux density required for reproduction, disabling to suppress the lowering of the reproduction output.

### <Examples 7 to 9 compared to Comparative Examples 17 to 19>

As is clear from Table 3, Examples 7 to 9 containing a metal ferromagnetic powder having a coercive force equal to or above 150.0 kA/m exhibited a much higher C/N at 10 MHz than the Comparative Examples 17 to 19 containing a powder having a coercive force below 150.0 kA/m.

Moreover, Examples 7 to 9 exhibited a higher 10 MHz output, i.e., a higher reproduction output than the Comparative Examples 17 to 19.

Thus, it has been made clear that the magnetic recording medium according to the present invention containing a metal ferromagnetic powder having a coercive force equal to or above 150.0 kA/m enables to almost maintain the reproduction output and reduce the noise.

That is, when the metal ferromagnetic powder has a coercive force equal to or above 150.0 kA/m, it is possible to sufficiently reduce the interaction between the magnetic powder particles and accordingly, to reduce the noise as well as to assure a sufficient magnetic flux density required for reproduction, which in turn enables to almost maintain the reproduction output.

In other words, when using a magnetic powder containing a metal ferromagnetic powder having a coercive force below 150.0 kA/m, it is impossible to assure a sufficient magnetic flux density required for reproduction, disabling to suppress the lowering of the reproduction output.

It should be noted that from the results of Table 1, Table 2, and Table 3, the following can be said. For example, when Examples 1 to 3 are compared to Examples 7 to 9, the Examples 7 to 9 having a 2-layered configuration consisting of a non-magnetic layer and a magnetic layer can be prepared with a reduced thickness of the magnetic layer, which enables to obtain a great reproduction output and a higher density corresponding to the reduced length of the recording wavelength.

As has been described above in detail, in the magnetic recording medium according to the present invention, the magnetic layer consists of a non-magnetic powder and a ferromagnetic powder, wherein the content of the non-magnetic powder is in the range of 20 to 80 weight % with respect to the total amount of the non-magnetic powder and the ferromagnetic powder contained in the magnetic layer. Consequently, the non-magnetic powder contained in the magnetic layer enables to reduce the magnetic interaction between the magnetic powder particles and as a result, it is possible to provide a magnetic recording medium capable of almost maintaining the reproduction output and having a reduced noise.

Moreover, when the non-magnetic powder is a non-magnetic iron oxide, it is possible to more effectively reduce the magnetic interaction between the magnetic powder particles and effectively reduce the noise. Here, the non-magnetic iron oxide is preferably a-Fe2O3.

Furthermore, when the magnetic powder in the magnetic layer is a metal ferromagnetic powder having a coercive force equal to or above 150.0 kA/m and saturation magnetization equal to or above 130.0 Am2/kg, i.e., when a magnetic powder having such a great magnetization is used, even if the non-magnetic powder is contained in a great amount, it is possible to suppress the lowering of the reproduction output due to the lowering of the magnetic density, enabling to effectively maintain the reproduction output and effectively reduce the noise.

Moreover, by using a magnetic recording medium including a non-magnetic support body on which a non-magnetic layer and the aforementioned magnetic layer are successively formed, it is possible to make the magnetic layer further thinner, flatter, and smoother, which can answer to the reduced wavelength during recording and is more advantageous for the electromagnetic conversion characteristic such as reproduction output.

## Claims

1. A magnetic recording medium including a non-magnetic support body on which is formed a magnetic layer made from a non-magnetic powder and a ferromagnetic powder dispersed in a binder,
wherein the non-magnetic powder in said magnetic layer is contained in a range of 20 to 80 weight % with respect to a total amount of the non-magnetic powder and the ferromagnetic powder in said magnetic layer.

2. A magnetic recording medium as claimed in Claim 1, wherein said non-magnetic powder is a non-magnetic iron oxide.

3. A magnetic recording medium as claimed in Claim 2, wherein said non-magnetic iron oxide is a-Fe2O3.

4. A magnetic recording medium as claimed in Claim 1,2 or 3 wherein said ferromagnetic powder in said magnetic layer is a metal ferromagnetic powder.

5. A magnetic recording medium as claimed in Claim 4, wherein said metal ferromagnetic powder has a coercive force equal to or above 150.0 kA/m and a saturation magnetization equal to or above 130.0 Am2/kg.

6. A magnetic recording medium as claimed in any preceding claim, wherein a non-magnetic layer including a non-magnetic powder dispersed in a binder is formed on said non-magnetic support body and said magnetic layer is formed on said non-magnetic layer.

7. A magnetic recording medium as claimed in Claim 6, wherein said magnetic layer has a thickness in a range from 0.02 mm to 0.5 mm.
